Europäisches Patentamt

European Patent Office

Office européen des brevets

(19)

(11) **EP 0 510 222 B1**

(12) **EUROPÄISCHE PATENTSCHRIFT**

(45) Veröffentlichungstag und Bekanntmachung des Hinweises auf die Patenterteilung:
**22.01.1997 Patentblatt 1997/04**

(51) Int Cl.⁶: **H04Q 3/545**, H04M 3/36, H04Q 3/66

(21) Anmeldenummer: **91106528.2**

(22) Anmeldetag: **23.04.1991**

(54) **Verfahren zur Überlastabwehr bei einer Vermittlungsstelle eines Kommunikationsnetzes**

Method for overload defence in an exchange of a communication network

Procédé pour défense de surcharge dans un central d'un réseau de communication

(84) Benannte Vertragsstaaten:
**AT BE CH DE DK FR GB GR IT LI NL**

(43) Veröffentlichungstag der Anmeldung:
**28.10.1992 Patentblatt 1992/44**

(73) Patentinhaber: **SIEMENS AKTIENGESELLSCHAFT**
**80333 München (DE)**

(72) Erfinder: **Held, Walter, Dipl.-Ing.**
**W-8192 Geretsried (DE)**

(56) Entgegenhaltungen:
EP-A- 0 213 382        EP-A- 0 213 408
EP-A- 0 276 421        US-A- 3 517 123
US-A- 3 700 822        US-A- 4 497 979

• SIEMENS FIRMENSPEZIFIKATION A30808-X2717-X-2-181989, MüNCHEN (DE) Seiten 1 - 20; MEYER, R16: 'EWSD - überlastbehandlung'
• NTZ Bd. 23, Nr. 4, April 1970, BERLIN (DE) Seiten 197 - 200; STOLPMANN: 'Endvermittlung für mobile Sondernetze'

## Beschreibung

Steigt das Verkehrsaufkommen, d.h. die Anzahl der Belegungsversuche über die maximale Kapazität einer Vermittlungsstelle an, dann kann das Belegungsangebot (Rate der Belegungsversuche) nicht mehr mit der nötigen Geschwindigkeit abgearbeitet werden und es tritt eine Überlast der Vermittlungsstelle auf.

Um die Überlast in einer Vermittlungsstelle abzuwehren, muß ein Teil der Belegungsversuche, die von außerhalb an die Vermittlungsstelle kommen (ankommende Belegungsversuche), abgewiesen werden. Dabei soll die Abweisung der Belegungsversuche entsprechend der bestehenden Überlast abgestuft durchgeführt werden. D.h., je größer die Überlast in der Vermittlungsstelle, desto mehr Belegungsversuche sind abzuweisen. Als ankommender Belegungsversuch ist jede von außerhalb der Vermittlungsstelle kommende Verarbeitungsanforderung an die Steuerung der Vermittlungsstelle anzusehen.

Aus Dokument EP-A-0 213 382 ist ein Verfahren zur überlastabwehr gemäß dem Oberbegriff des Anspruchs 1 bekannt.

Gemäß der Spezifikation EWSD, Überlastbehandlung, A30808-X2717-X- 2-18 der Firma Siemens ist es bekannt, die Überlastabwehr mit Hilfe von sieben Überlaststufen zu regeln, wobei Überlaststufe 0 bedeutet, daß alle Belegungsversuche, und Überlaststufe 6, daß nur noch 0% bis 5% (Restakzeptanz) der ankommenden Belegungsversuche angenommen werden.

Dazwischen wird eine Gleichverteilung angestrebt, d.h. erhöht sich die Überlaststufe um 1, werden ca. 16% weniger Belegungsversuche angenommen.

Jedem Anschlußport wird eine von sieben möglichen Prioritäts-stufen zugeordnet. Dabei ist Prioritätsstufe 0 gleichbedeutend mit niederster Priorität, und Prioritätsstufe 6 gleichbedeutend mit höchster Priorität.

Ein Belegungsversuch wird dann abgewiesen, wenn die Prioritätsstufe des zugehörenden Ports kleiner ist als die Überlaststufe, in der sich die Vermittlungsstelle befindet.

Bei den Teilnehmeranschlußleitungen wird zwischen priorisierten und nichtpriorisierten Teilnehmeranschlußleitungen unterschieden. Die nichtpriorisierten Teilnehmeranschlußleitungen (normale Teilnehmeranschlußleitungen) werden gleichmäßig auf die vier Prioritätsstufen 0 bis 3 aufgeteilt. Die Aufteilung erfolgt automatisch aufgrund einer Verknüpfung der Portadresse mit der Uhrzeit. Alle ca. 30 sek. wechseln diese Ports zyklisch ihre Prioritätsstufenzugehörigkeit:

$$0 \rightarrow 1 \rightarrow 2 \rightarrow 3$$

D.h. jeder dieser normalen Ports befindet sich über einen längeren Zeitraum gesehen gleichhäufig in der Prioritätsstufe 0, 1, 2 und 3.

Festpriorisierte Ports werden durch ein sogenanntes MML-Kommando als solche gekennzeichnet und der Prioritätsstufe 5 zugeordnet, wobei das MML-Kommando ein Kommando des Betriebsprogramms der Vermittlungsstelle darstellt und durch das Betriebspersonal des Kommunikationsnetzes eingegeben wird. Belegungsversuche von Teilnehmern mit einem festpriorisierten Port werden erst bei sehr hoher Überlast (Überlaststufe 6) abgewiesen.

Die Prioritätsstufen der Ports von Verbindungsleitungen sind fest, d.h. zeitlich unveränderlich und werden diesen bündelweise per MML-Kommando zugewiesen, d.h. die Ports eines bestimmten Bündels von Verbindungsleitungen haben alle dieselbe Priorität.

Die Prioritätsstufen der Bündel werden dabei nach Netzgesichtspunkten vergeben. In Ortsvermittlungsstellen und Ortstransitvermittlungsstellen werden für Verbindungsleitungsbündel die Prioritätsklassen 3 bis 6 verwendet. Für reine Fern- und Transitvermittlungsstellen werden die Verbindungsleitungsbündel auf die Prioritätsstufen 0 bis 6 verteilt.

Die genannte Art der Vergabe der Prioritätsstufen von Verbindungsleitungsbündeln durch das Betriebspersonal des Vermittlungsnetzbetreibers wird leider häufig in unsachgemäßer Weise bzw. manchmal überhaupt nicht durchgeführt. Dies wirkt sich im Überlastfall auf das Verhalten der Vermittlungsstelle entsprechend negativ aus.

Der Erfindung liegt die Aufgabe zugrunde, das genannte Problem bei der Vergabe der Prioritätsstufen für Verbindungsleitungsbündel zu vermeiden.

Diese Aufgabe wird durch die kennzeichnenden Merkmale von Anspruch 1 gelöst.

Das Verfahren nach Anspruch 2 besitzt insbesondere den Vorteil, daß ein Verbindungsaufbau, für den bereits eine Vielzahl von Vermittlungseinrichtungen belegt wurde, aufgrund hoher Priorität vollendet werden kann.

Folgende Vorteile werden mit der Erfindung erzielt:

- Entlastung des Betriebspersonals während des Betriebs der Vermittlungsstelle sowie des Installationspersonals des Herstellers bei der erstmaligen Vergabe der Prioritätsstufen bei Inbetriebnahme der Vermittlungsstelle.

- Auch bei sehr hoher Überlast werden aufgrund der gleichmäßigen Verteilung verschiedener Prioritätsstufen innerhalb eines Verbindungsleitungsbündels nicht mehr ganze Verbindungsleitungsbündel und damit Kommunikationsrichtungen ausgeblendet. Dies ist vor allem bei kleinen Vermittlungsstellen mit wenigen Verbindungsleitungsbündeln oder privaten Nebenstellenanlagen von großer Bedeutung.

- Jeder an eine Vermittlungsstelle angeschlossene Normalteilnehmer hat auch bei hoher Überlast seiner Vermittlungsstelle die Chance, einen Ruf (z. B. Notruf) abzusetzen.

- Geringere Wartedauer für geduldige Teilnehmer.

- Ein besseres Arbeiten des Überlastabwehrmechanismusses, da alle Ports einer Vermittlungsstelle gleichmäßiger auf die einzelnen Prioritätsstufen verteilt sind.

Im folgenden wird die Erfindung selbst sowie die Umgebung innerhalb deren sich die Erfindung abspielt, genauer beschrieben.

Einrichtungen zur Überlastabwehr sorgen dafür, daß es im Überlastfall einer Vermittlungsstelle nicht zu einer gehäuften Wiederholung von Verbindungsversuchen durch die zentrale Steuerung der Vermittlungsstelle kommt, d.h. daß die Blindlast nicht die Nutzlast der Vermittlungsstelle verdrängt.

Um die Überlast in abgestufter Weise zu erkennen sind Einrichtungen vorhanden, die anhand mehrerer sogenannter Überlastindikatoren das Ausmaß der Überlast (Überlaststufe) erkennen.

Als Überlastindikator der zentralen Steuerung kann beispielsweise die Reaktionsdauer der zentralen Steuerung der Vermittlungsstelle auf eine Meldung einer peripheren Steuerung in einer Anschlußgruppe der Vermittlungsstelle gemessen werden. Als Überlastindikatoren einer peripheren Steuerung der Vermittlungsstelle können beispielsweise die Menge der benutzten Datenblöcke im verfügbaren Datenspeicher der peripheren Steuerung dienen und/oder die Höhe des Rückstaus in den Ein-/Ausgabepuffern der peripheren Steuerung.

Aus den genannten Überlastindikatoren wird die Überlaststufe der Vermittlungsstelle ermittelt, die als Vergleichsnormal für die Entscheidung über Annahme oder Abweisung eines Belegungsversuches herangezogen wird. Ist die momentane Prioritätsstufe eines Ports kleiner als die momentane Überlaststufe der Vermittlungsstelle, so wird ein Belegungsversuch abgewiesen, während er im anderen Fall angenommen und ordnungsgemäß bearbeitet wird. Daraus ergibt sich, daß je nach Überlaststufe der Vermittlungsstelle mehr oder weniger ankommende Belegungsversuche abgewiesen werden.

Das Prinzip der Erfindung liegt nun darin, auch die Ports von normalen Verbindungsleitungen bei ankommenden Belegungsversuchen als zyklisch priorisierte Ports zu behandeln. Das bedeutet, daß die Prioritätsstufen für Verbindungsleitungen, die nicht fest priorisiert sind (normale Verbindungsleitungen) automatisch durch die Software der jeweiligen Anschlußgruppe der Vermittlungsstelle vergeben werden, ohne daß dazu eine Vergabe durch das Betriebspersonal des Vermittlungsnetzbetreibers notwendig ist.

Die Prioritätsstufen werden generell ohne Unterscheidung des Vermittlungsstellentyps gleichmäßig auf die Prioritätsstufen 1 bis 5 unter Verwendung von Portadressen und Uhrzeit verteilt. Ebenfalls wie bei den normalen Teilnehmeranschlußleitungen tauschen die Ports der normalen Verbindungsleitungen innerhalb eines Zyklus ca. 30 Sek. ihre Prioritätsstufenzugehörigkeit:

$$1 \rightarrow 2 \rightarrow 3 \rightarrow 4 \rightarrow 5$$

Um eine Verkürzung der Wartezeit von geduldigen, auf den Wählton wartenden Teilnehmern zu erreichen, werden deren Teilnehmerports nicht mehr auf die Prioritätsstufen 0 bis 3, sondern auf die Prioritätsstufen 0 bis 4 verteilt. Der zyklische Wechsel der Prioritätsstufen wird beibehalten.

Die zyklisch priorisierten Ports der Verbindungsleitungen sind also im zeitlichen Mittel um eine Prioritätsstufe gegenüber denen der Teilnehmeranschlußleitungen erhöht. Dies geschieht zum einen, weil den Belegungsversuchen über Verbindungsleitungen bereits angenommene Belegungsversuche über Teilnehmeranschlußleitungen oder Verbindungsleitungen vorausgehen, d.h. bereits Vermittlungseinrichtungen belegt wurden, zum anderen, weil bei Überlast auf Wählton wartende Teilnehmer einen größeren Angebotsdruck erzeugen, als die über Verbindungsleitungen von anderen Vermittlungsstellen eintreffenden Belegungsversuche, da diese Belegungsversuche bei einer Abweisung nicht wie bei wartenden Teilnehmern bestehen bleiben.

Mit Hilfe des MML-Kommandos werden fest priorisierte Verbindungsleitungen nur noch für besondere Zwecke eingerichtet, z.B. für Verbindungsleitungen zu Notrufeinrichtungen oder für Übergänge zu militärischen Nachrichtennetzen. Diese fest priorisierten Verbindungsleitungen erhalten ausschließlich die Prioritätsstufe 6. Hierbei sollen nicht mehr als 5% der Verbindungsleitungen einer Anschlußgruppe fest priorisiert werden, um die Überlastabwehr funktionsfähig zu erhalten.

Die Prioritätsstufe D bleibt bei reinen Transitvermittlungsstellen, die ausschließlich Verbindungsleitungen aufweisen, unbeschaltet. Dies wirkt sich bei Beginn einer Überlastungssituation nicht negativ auf die Überlastabwehr aus, da bei Erkennen einer Überlastsituation die Überlastabwehr generell mit der Überlaststufe 3 startet. Nur falls während einer bestehenden Überlastsituation kurzfristig auf die Überlaststufe 0 zurückgegangen wird, verzögert sich die Abwehr eines erneuten Anstieges der Überlast um 1 sec. Die Abwehr kann dann erst bei Erreichen der Überlaststufe 2 erfolgen.

Mit dem erfindungsgemäßen Verfahren durchgeführte Simulationen ergaben gegenüber dem alten Verfahren eine gleichmäßigere Behandlung von Teilnehmeranschluß- und Verbindungsleitungen, eine deutlich geringere mittlere Wartezeit von geduldigen Teilnehmern und geringere Warteschlangenlängen bzw. Wartedauern in der Auftrags-Liste der peripheren Steuerungen bei Betrachtung aller angenommener Belegungsversuche.

**Patentansprüche**

1. Verfahren zur Überlastabwehr bei einer Vermittlungsstelle eines Kommunikationsnetzes, demgemäß

a) für die Vermittlungsstelle ständig eine momentane Überlaststufe aus sogenannten Überlastindikatoren zur Anzeige der Verkehrsbelastung der Komponenten der Vermittlungsstelle ermittelt wird,

b) der Port einer Teilnehmerleitung im Zusammenhang mit ankommenden Belegungsversuchen entsprechend einer zugeordneten Prioritätsstufe behandelt wird,

c) die Zuordnung der Prioritätsstufen normalerweise zyklisch erfolgt, indem die Prioritätsstufe eines solchen Ports in bestimmten Zeitabständen erhöht wird, bis erneut mit der niedrigsten Prioritätsstufe des Zyklusses begonnen wird,

d) bei einem Belegungsversuch eines solchen Ports ein Vergleich der momentanen Prioritätsstufe des Ports mit der momentanen Überlaststufe der Vermittlungsstelle durchgeführt wird,

e) ein Belegungsversuch eines solchen Ports abgewiesen wird, wenn der genannte Vergleich ergibt, daß die momentane Überlaststufe größer als die momentane Prioritätsstufe des Ports ist,

**dadurch gekennzeichnet,**
daß

f) der Port einer normalen Verbindungsleitung für ankommende Belegungsversuche ebenfalls als zyklisch priorisierter Port behandelt wird,

g) die Prioritätsstufe des zyklisch priorisierten Ports einer Verbindungsleitung im zeitlichen Mittel gegenüber der Prioritätsstufe des zyklisch priorisierten Ports einer Teilnehmerleitung um mindestens eine Stufe erhöht ist.

2. Verfahren nach Anspruch 1,
**dadurch gekennzeichnet,**
daß für besondere Zwecke, wie Notrufeinrichtungen oder Übergänge zu militärischen Nachrichtennetzen, ein kleiner Anteil von Ports von Verbindungsleitungen mit der höchsten Prioritätsstufe fest priorisiert wird.

3. Verfahren nach Anspruch 1 oder 2,
**dadurch gekennzeichnet,**
daß der Port einer Verbindungsleitung für ankommende Belegungsversuche bei bezüglich der Hierarchie der Vermittlungsstufe absteigender Verbindungsaufbaurichtung als ein Port mit einer zeitlich unveränderlich hohen Prioritätsstufe behandelt wird.

**Claims**

1. Method for overload prevention at an exchange of a communication network, according to which

a) an instantaneous overload level being determined continuously for the exchange from so-called overload indicators in order to display the traffic load on the components of the exchange,

b) the port of a subscriber line being handled in conjunction with incoming seizure attempts in accordance with an assigned priority level,

c) the assignment of the priority levels normally taking place cyclically in that the priority level of such a port is increased at specific time intervals until the system starts again with the lowest priority level of the cycle,

d) in the case of a seizure attempt of such a port, a comparison of the instantaneous priority level of the port with the instantaneous overload level of the exchange is carried out,

e) a seizure attempt of such a port is rejected if the result of the aforesaid comparison is that the instantaneous overload level is higher than the instantaneous priority level of the port, characterized in that

f) the port of a normal connection line for incoming seizure attempts is also handled as a cyclically prioritised port,

g) the priority level of the cyclically prioritised port of a connection line is, on chronological average, higher by at least one level in comparison with the priority level of the cyclically prioritised port of a subscriber line.

2. Method according to Claim 1, characterized in that, for particular purposes such as emergency call equipment or interfaces with military telecommunication networks, a small proportion of ports of connection lines are permanently prioritised with the highest priority level.

3. Method according to Claim 1 or 2, characterized in that the port of a connection line for incoming seizure attempts in the case of a falling connection setup direction with respect to the hierarchy of the switching level, is handled as a port with a chronologically nonvariably high priority level.

**Revendications**

1. Procédé de contrôle de surcharge dans un central d'un réseau de communication, suivant lequel

a) on détermine pour le central en permanence un échelon de surcharge du moment, à partir ce que l'on appelle des indicateurs de surcharge servant à indiquer la charge de trafic des composants du central,

b) on traite le point d'accès d'une ligne d'abonné en liaison avec des tentatives de prise d'arrivée suivant un échelon de priorité associé,

c) on effectue l'association des échelons de priorité cycliquement de manière normale, en augmentant l'échelon de priorité d'un point de connexion de ce genre à des intervalles déterminés, jusqu'à ce que l'on recommence par l'échelon de priorité le plus bas du cycle,

d) lors d'une tentative de prise d'un point d'accès de ce genre, on compare l'échelon de priorité du moment du point d'accès à l'échelon de surcharge du moment du central,

e) on refuse une tentative de prise, si ladite comparaison donne que l'échelon de surcharge du moment est supérieure à l'échelon de priorité du moment du point d'accès,

caractérisé en ce que

f) on traite le point d'accès d'une ligne de liaison normale destinée à des tentatives de prise d'arrivée également comme un point d'accès prioritaire cycliquement,

g) on augmente en moyenne dans le temps d'au moins un échelon, par rapport à l'échelon de priorité du point d'accès d'une ligne d'abonné prioritaire, cycliquement l'échelon de priorité du point d'accès d'une ligne de liaison prioritaire cycliquement.

2. procédé suivant la revendication 1, caractérisé en ce que, à des fins particulières, comme pour des installations d'appel de secours ou des transferts à des réseaux de communication militaires, on donne priorité fixe à une petite partie de points d'accès de lignes de liaison ayant l'échelon de priorité le plus élevé.

3. procédé suivant la revendication 1 ou 2, caractérisé en ce que, lors d'un établissement de liaison dont l'échelon de commutation dans la hiérarchie diminue, on traite le point d'accès d'une ligne de liaison destinée à des tentatives de prise d'arrivée comme un accés ayant de manière inchangée dans le temps un échelon de priorité élevé.